# EUROPÄISCHE PATENTSCHRIFT

(11) **EP 1 132 682 B1**
(45) Veröffentlichungstag und Bekanntmachung des Hinweises auf die Patenterteilung: **25.05.2005**
(21) Anmeldenummer: 01103161.4
(22) Anmeldetag: 10.02.2001
(51) Int. Cl.: F21V 21/04, H02G 3/12

(54) **Hohlkörper für die Elektroinstallation**
Hollow article for an electrical installation
Corps creux pour une installation électrique

(30) Priorität: 11.03.2000 DE 10011905; 29.06.2000 DE 10031748
(43) Veröffentlichungstag der Anmeldung: 12.09.2001
(73) Patentinhaber: Kaiser GmbH & Co. KG, 58579 Schalksmühle (DE)
(72) Erfinder: Buchta, Norbert, 58791 Werdohl (DE); Purschke, Helmut, 58579 Schalksmühle (DE)
(74) Vertreter: Köchling, Conrad-Joachim, Dipl.-Ing.

(56) Entgegenhaltungen:
- DE-A- 3 643 559
- DE-A- 4 318 125
- DE-A- 4 324 058
- DE-U- 1 862 438
- FR-A- 2 730 354
- FR-A- 2 797 357

## Beschreibung

Die Erfindung betrifft einen Hohlkörper für die Elektroinstallation mit einem Aufnahmeraum für elektrische Einrichtungen wie Leuchten, Klemmen, Dosen oder dergleichen Installationsteile, wobei der Hohlkörper ein topfähnliches Rückteil, das mindestens mündungsnah zylindrisch ausgebildet ist, sowie ein Frontteil, aufweist, das an der Mündung des Rückteiles befestigbar ist, so dass der Hohlkörper hinter einer Hohlwand oder Hohldecke anzuordnen und der Aufnahmeraum durch das eine entsprechende Öffnung aufweisende, zentrisch zu einer Lochung der Hohlwand angeordnete Frontteil zugänglich ist, wobei das Frontteil scheibenartig ausgebildet und in die Mündung des Rückteils eingreifend ausgebildet ist, wobei das Frontteil in der Montagesolllage in der Mündung des Rückteils fixierbar ist.

Ein Hohlkörper dieser Gattung ist aus der FR-A-2730 354 bekannt. Dieser ist für eine durch die Decke-Montage geeignet.

Aus der DE 43 18 125 A 1 ist ein Hohlkörper ähnlicher Art bekannt, der dazu bestimmt ist, rückseitig einer Hohldecke eingebaut zu werden.

Bei der Decke handelt es sich beispielsweise um eine abgehängte Decke mit dekorativem Charakter, die beispielsweise aus Paneelen besteht oder als Kassettendecke ausgeführt ist. Bei einer solchen Decke wird während des Deckenaufbaus eine entsprechende Lochung in der Decke vorgesehen. In diese Lochung wird das Frontteil mit einem entsprechenden Kragen eingesetzt, wobei das Frontteil rückseitig der Decke ebenfalls einen Kragen aufweist. In diesen Kragen kann das Rückteil mit seiner Mündung eingesetzt werden, so dass es von dem Kragen mündungsseitig umfasst ist.

Aus der DE 43 24 058 A 1 ist ebenfalls ein ähnlicher Hohlkörper bekannt. Dieser ist zum Einbau in einer Hohldecke bestimmt, deren Sichtfläche beispielsweise durch eine Gipskartonplatte oder dergleichen gebildet ist, wobei sich vorzugsweise hinter der Hohldecke auch Dämm-Material befindet. Um einen solchen Hohlkörper in einer solchen Decke einbauen zu können, wird von der Sichtseite der Decke her ein Durchbruch in der Decke ausgebildet, in welchen das Frontteil mit einen entsprechenden Kragen einsteckbar ist, wobei das Frontteil durch entsprechende Haltemittel an der Decke fixierbar ist. In das Frontteil kann das Rückteil, dass vor der Montage des Frontteiles in den Hohlraum eingedrückt wird, in den Kragen des Frontseiles mit seiner Mündung eingepasst werden, so dass die Mündung des Rückteiles von dem Frontteil umgriffen ist.

Die im Stand der Technik bekannte Ausbildung benötigt für die unterschiedliche Einbausituation (hinter der Decken-Montage beziehungsweise durch die Decken-Montage) unterschiedlich ausgebildete Bestandteile sowohl hinsichtlich des Frontteiles als auch hinsichtlich des Rückteiles. Dies bedeutet einen erheblichen zusätzlichen Fertigungsaufwand für die beiden Varianten sowie einen ebenfalls erheblichen zusätzlichen Lageraufwand sowohl beim Hersteller als auch beim Großhandel oder beim Anwender selbst.

Ausgehend von diesem Stand der Technik liegt der Erfindung die Aufgabe zugrunde, einen Hohlkörper für die Elektroinstallation gattungsgemäßer Art zu schaffen, der es unter Verwendung derselben Komponenten ermöglicht, den Einbau in beiden angegebenen Einbauarten durchzuführen und einen deckenbündigen Einbau zu erreichen.

Zur Lösung dieser Aufgabe schlägt die Erfindung vor, dass das Frontteil alternativ in einer ersten Lage in der Mündung des Rückteils befestigbar ist, in der das scheibenartige Frontteil hinter dem Mündungsrand des Rückteiles zurückliegt, wobei ein am Frontteil vorgesehener, dessen Mittellochung umgebender Kragen mit seiner freien Randkante in Flucht zum Rand des Rückteiles liegt, oder in einer zweiten Lage in der Mündung des Rückteiles befestigbar ist, in der das scheibenartige Frontteil etwa bündig mit dem Mündungsrand des Rückteiles abschließt, wobei ein am Frontteil vorgesehener, dessen Mittellochung umgebender Kragen etwa um die Kragenhöhe über den Mündungsrand des Rückteiles vorragt.

Durch diese Ausbildung ist erreicht, dass das Frontteil und das Rückteil in identischer Ausbildung sowohl für die Hinterdeckenmontage als auch für die "Durch die Decke Montage" geeignet ist. Bei der Hinterdeckenmontage kann das Frontteil in geeigneter Weise von der Hinterseite der Decke her im Bereich der entsprechenden Lochung der Decke fixiert werden, wobei dann das Rückteil ebenfalls von der Hinterseite der Decke her in einfacher Weise mit dem Frontteil verbunden werden kann. In gleicher Weise ist es möglich, in einer Hohldecke, die beispielsweise aus Gipskartonplatten gebildet ist, eine Lochung vorzusehen, in welche das Rückteil eingesetzt werden und lagegesichert gehalten werden kann, wobei dann anschließend das Frontteil in der Mündung des Rückteiles fixiert werden kann.

Hierbei ist ein deckenbündiger Einbau (bündig mit der Sichtseite der Decke) der Teile ermöglicht.

Dabei hat die Mittellochung des Frontteiles wie auch bei den vorbeschriebenen Ausbildungen vorzugsweise eine Abmessung von 60 bis 80 mm, so dass übliche Einbauleuchten in die Mittellochung passend eingesetzt werden können.

Eine besonders bevorzugte und zur Lösung der Aufgabe vorteilhafte Weiterbildung wird darin gesehen, dass das Frontteil eine vornehmlich kreisartige Mittelöffnung aufweist, die von einem von dem Frontteil abragenden Kragen umgeben ist, wobei der Kragen auf der dem Rückteil abgewandten Seite von dem Frontteil abragt.

Durch diese Ausbildung ist es möglich, bei der Hinterdeckenmontage das Frontteil von der Hinterseite der Decke her in die entsprechende Lochung der Decke derart einzusetzen, dass der Kragen in die Lochung der Decke eingreift. Bei der durch die Deckenmontage, bei der zunächst das Rückteil in die Lochung der Decke eingesetzt und fixiert wird, kann anschließend das Frontteil in das Rückteil eingesetzt werden, wobei der Kragen zur Sichtseite hin vorragt. Hierdurch kann der zwischen dem Kragen und dem Mündungsrand des Rückteiles gebildete ringartige Freiraum ausgespachtelt werden, so daß in der endgültigen Montageposition lediglich die vom Kragen umgebende Lochung des Frontteiles sichtbar bleibt, sämtliche anderen Bestandteile aber durch eine Wand- oder Deckenbekleidung, beispielsweise eine Tapete oder dergleichen verdeckt werden können.

Bevorzugt ist dabei vorgesehen, daß das scheibenartige Frontteil in seiner Scheibenfläche kleine Durchbrüche aufweist.

Diese Ausbildung ist insbesondere bei der durch die Deckenmontage vorteilhaft, weil die Spachtelmasse, die in den Bereich eingebracht wird, die vom scheibenartigen Frontteil, dessen Kragen und dem Mündungsrand des Rückteiles begrenzt ist, auch durch die kleinen lochartigen Durchbrüche hindurchgedrückt werden kann, so daß ein sicherer Halt der Spachtelmasse an dem Frontteil gewährleistet ist.

Um die Verbindung des Frontteiles mit dem Rückteil in sicherer und einfacher Weise auszubilden, wird vorgeschlagen, dass an der Rückseite des Frontteiles die dem Inneren des Rückteiles zugewandt ist, hakenartige Verbindungsmittel nahe der Umfangsrandkante des Frontteiles vorgesehen sind, und daß an der Wandung des Rückteiles Stützflächen vorgesehen sind, an die das Frontteil anlegbar ist und hinter welche die hakenartigen Verbindungsmittel bei Drehung des Frontteiles relativ zum Rückteil greifen.

Zur Befestigung der Teile aneinander kann je nach Einbausituation entweder das Rückteil auf das schon in dem Deckenausschnitt fixierte Frontteil aufgesetzt werden, bis die Stützflächen an dem Frontteil anliegen. Dann kann durch Drehung des Rückteiles die Verriegelung der Stützflächen an den hakenartigen Verbindungsmitteln erfolgen. Alternativ ist es möglich, zunächst das Rückteil in die entsprechende Lochung der Decke einzusetzen und an der Decke zu fixieren, wobei dann anschließend das Frontteil in die Mündung des Rückteiles eingesetzt wird, bis sich das Frontteil an den Stützflächen abstützt, so daß dann durch Drehung des Frontteiles um die Mittelachse die Verriegelung der hakenartigen Verbindungsmittel an den Stützflächen erfolgt.

Vorzugsweise ist dabei vorgesehen, daß die Stützflächen als radial von der Innenwandung des Rückteils abragende Stege ausgebildet sind.

Nebenbei ist anzumerken, daß sowohl das Frontteil als auch das Rückteil jeweils ein einstückig aus Kunststoff gefertigtes Element ist. Weiterhin ist festzuhalten, daß das Rückteil gegenüber dem hinter der Decke befindlichen Raum winddicht ausgebildet ist, also keine Lochungen oder Schlitze oder dergleichen aufweist, so daß Zuglufterscheinungen oder Verschmutzungen vermieden sind, die durch hinter der Sichtfläche der Decke liegende Strömungen oder Bestandteile verursacht werden könnten. Das Kunststoffmaterial und die Kunststoffteile sollte ausreichend wärmebeständig sein, so daß der Einbau von üblichen Strahlerleuchten mit einer Leistung von bis zu 50 Watt möglich ist. Sogenannte Kaltlichtlampen sollten nicht in eine solche Vorrichtung eingebaut werden, da diese eine zu hohe Temperaturbelastung für den Hohlkörper darstellen könnten.

Um eine eindeutige Lagesicherung der Teile aneinander in der Verrastungslage oder Verhakungslage zu gewährleisten, ist zudem vorgesehen, daß die hakenartigen Stege des Frontteiles durch in Umfangsrichtung des Frontteils einseitig offene und andernends geschlossene L-förmige von der Rückseite des Frontteils abragende Stege gebildet sind.

Dabei können die freien Enden der hakenartigen Stege Rastkanten aufweisen, die in der Montagesollage hinter die Randkante der innenliegend am Rückteil angeformten Stützflächen beziehungsweise Stege greifen, so daß eine sichere Arretierung in der Sollage erreicht ist.

Eine weiterhin bevorzugte Ausbildung wird darin gesehen, daß jeweils zwei Stützflächenpaare diametral gegenüberliegend und paarweise in Umfangsrichtung zueinander versetzt in den beiden Befestigungsebenen des Rückteiles vorgesehen sind.

Die Stützflächenpaare sind jeweils paarweise in einer Ebene angeordnet, wobei die beiden Ebenen in unterschiedlicher Tiefe relativ zum Rückteil vorgesehen sind. Das Frontteil ist derart ausgebildet, beispielsweise mit Randungsausschnitten versehen, so daß dann, wenn das Frontteil an den Stegen der hinteren Ebene verhakt werden soll, ein Durchgriff und Vorbeiführen an den Stützflächenpaaren der vorderen Ebene ermöglicht ist.

Um insbesondere die Befestigung des Rückteiles in dem Deckenausschnitt zu ermöglichen, sofern die durch die Deckenmontage vorgenommen wird, ist vorgesehen, daß am Rückteil an zwei diametral gegenüberliegenden Bereichen innenliegend Haltedome vorgesehen sind, in denen jeweils eine von der Vorderseite des Rückteils her betätigbare Schrauben gelagert sind, auf deren in Ausnehmungen der Außenumfangsfläche des Rückteiles austretende Enden Haltelaschen aufgeschraubt sind.

Zudem weist das Rückteil vorzugsweise eine mündungsseitig radial außen vorstehende Anschlagfläche oder dergleichen auf, mit der das Rückteil an die Frontseite der Wandung der Decke angelegt ist, so daß ein Gegenlager für die an der Rückseite des Deckenausschnittes angreifenden Haltelaschen gebildet ist.

Bevorzugt ist zudem vorgesehen, daß die Dome die Köpfe der Schrauben versenkt aufnehmen und die Stirnflächen der Dome in der Ebene der Stützflächen für die zweite Lage liegen, wobei das Frontteil randseitig offene Ausnehmungen aufweist, die die Enden der Dome bei in der ersten Lage angeordnetem Frontteil mit Spiel in Umfangsrichtung des Frontteiles umgeben.

Durch diese Ausbildung ist sichergestellt, daß weder die Dome noch die Schrauben ein Hindernis bei der Zusammenführung des Frontteiles mit dem Rückteil darstellen, unabhängig von der gewählten Einbausituation.

Um die hinterseitig der Decke verlegte elektrische Verdrahtung in das Rückteil einführen zu können, weist das Rückteil mindestens eine Lochung auf, durch die ein elektrisches Kabel abgedichtet hindurch geführt werden kann. Insbesondere dann, wenn in das Rückteil eine Niedervoltleuchte eingebaut werden soll, ist auch die Anordnung und Installation eines Transformators erforderlich. Um den Transformator als wärmeerzeugendes Teil nicht innerhalb des Rückteiles anordnen zu müssen, ist vorgesehen, daß das Rückteil einen seitlichen Wandungsausschnitt aufweist, der eine Größe aufweist, die der Größe von durch die Mittellochung des Frontteiles schiebbaren Installationsteilen entspricht, wobei eine durch die Mittellochung zuführbare Verschlußkappe vorgesehen ist, die den Wandungsausschnitt insbesondere dicht schließend in den Wandungsausschnitt einfügbar ist.

Bei der Installation des Hohlkörpers kann dieser zunächst in der gewünschten Weise an der Decke fixiert werden. Dabei kann das elektrische Anschlußkabel durch den seitlichen Wandungsausschnitt in das Rückteil eingeführt werden und mit entsprechenden Teilen, beispielsweise mit einem Transformator verdrahtet werden. Nachfolgend kann dann der Transformator oder ein sonstiges Installationsteil durch die ausreichend große Mittellochung des Frontteiles in das Rückteil eingeschoben werden und durch den seitlichen Wandungsausschnitt in einen Bereich außerhalb des Rückteiles geschoben werden, der sich hinter der entsprechenden Decke befindet. Das von dem Installationsteil, beispielsweise Transformator, kommende elektrische Kabel kann durch eine Lochung der Verschlußkappe geführt werden. Anschließend kann die Verschlußkappe in den Wandungsausschnitt eingefügt werden und diesen dicht abschließen, so daß das Rückteil gegenüber dem umgebenden hinter der Decke befindlichen Raum winddicht verschlossen ist.

Bevorzugt ist dazu vorgesehen, daß in der Verschlußkappe eine elektrische Klemmleiste gehaltert ist, die vom Innenraum des Rückteils zugänglich ist, wobei eine Bodenwandung der Verschlußkappe eine Durchlaßöffnung für ein von außen zugeführtes Kabel aufweist, wobei das Kabel vorzugsweise abgedichtet eingeführt ist.

Gemäß dieser Ausbildung kann an der Verschlußkappe eine elektrische Klemmleiste gehaltert sein, die vom Innenraum des Rückteiles her zugänglich ist, so daß die entsprechende Verdrahtung beispielsweise mit einer in das Frontteil einsetzbaren Niedervoltleuchte in einfacher Weise ermöglicht ist.

Um den dichten Anschluß der Verschlußkappe in dem Wandungsausschnitt des Rückteiles zu erreichen, ist zudem vorgesehen, daß die Verschlußkappe an ihrem Rand einen umlaufenden Kragen aufweist, der dicht an die Ränder des Wandungssausschnittes des Rückteiles anschließt.

Aus dem gleichen Grunde und um eine einfache Fixierung der Verschlußklappe in der Montagesollage zu gewährleisten, ist vorgesehen, daß an der Wandung des Rückteils nahe eines etwa parallel zum Boden des Rückteils verlaufenden Randes und nahe eines davon in Richtung zur Mündung beabstandeten Randes der Durchlaßöffnung Rastmittel vorgesehen sind, die in Montagesollage der Verschlußkappe über Teile von deren Kragen greifen.

Um insbesondere die Montage mit einer Hand durch die Lochung des Frontteiles hindurch zu ermöglichen und auch die Demontage mit einer Hand zu gewährleisten, ist vorgesehen, daß der parallel zum Boden verlaufende Rand der Durchlaßöffnung dem Boden des Rückteils unmittelbar benachbart ist und am Boden innenliegend des Rückteils Rastkufen mit Einführschräge als Rastmittel ausgebildet sind, während am davon beabstandeten, etwa parallel verlaufenden anderen Rand der Durchlaßöffnung hakenartige Rastmittel vorgesehen sind.

Zur Befestigung der Verschlußkappe kann diese mit einer Hand lagerichtig der entsprechenden Durchlaßöffnung zugeführt werden, wobei zunächst eine Verhakung der einen Randkante hinter den hakenartigen Rastmitteln erfolgt und anschließend eine Schwenkung der Verschlußkappe, so daß diese über die Rastkufen mit Einführschräge in die endgültige Rastposition auch der zweiten Randkante überführt wird. In analoger Weise kann mit einfachen Mitteln die Entrastung erfolgen, in dem entweder manuell oder mit Hilfe eines Schraubendrehers hinter die Randkante gegriffen wird, die an den Rastkufen mit Einführschräge verrastet ist. Anschließend kann dann die Verschlußkappe geringfügig verschwenkt und aus der Verrastungslage entrastet werden.

Eine bevorzugte Anordnung wird darin gesehen, daß das Rückteil in eine Lochung einer Wandung oder einer Decke eingeschoben und in der Einschublage an dem Wandungs- oder Deckenmaterial fixiert ist, das Frontteil versenkt in der ersten Lage in die Mündung des Rückteils eingesetzt und dort fixiert ist, so daß der Kragen des Frontteiles bündig zum Mündungsrand des Rückteiles und bündig mit der Außenseite der Wandung oder Decke abschließt.

Eine alternative bevorzugte Anordnung wird darin gesehen, daß das Frontteil mit seinem Kragen mindestens reibschlüssig in eine passende Lochung einer Wandung oder Decke eingeschoben ist, wobei das scheibenartige Frontteil auf der Rückseite der Wandung oder Decke anliegt, und daß das Rückteil in der zweiten Lage auf das Frontteil von der Rückseite der Decke oder Wandung aufgesetzt und an diesem fixiert ist.

Der Kragen des Frontteiles kann mit reibungserhöhenden Vorsprüngen, Wellungen, Zahnungen oder dergleichen ausgebildet sein, so daß ein sicherer Sitz in der entsprechenden Lochung oder Wandung erreicht ist.

Eine den sicheren Sitz verbessernde Weiterbildung wird darin gesehen, daß das Rückteil mündungsseitig einen kleinen, außen umlaufenden Kragen aufweist, der in der ersten Lage bündig in einem Randversenk der Lochung der Wandung oder Decke einliegt.

Als alternative Weiterbildung schlägt die Erfindung vor, daß die randoffenen Ausnehmungen des Frontteiles von einem kragenartigen Wandteil des Frontteiles begrenzt sind, daß an dem Wandteil ein sich in Umfangsrichtung erstreckender Steg ausgebildet ist, wobei der Steg nur über einen Teil der Länge des Wandteiles verläuft und neben dem Steg ein Freiraum zur Aufnahme des Endes des Domes des Rückteiles verbleibt,
daß der Steg parallel zur Randkante und mit Abstand von der Randkante des Frontteiles verläuft, und daß jeder Dom einen in Umfangsrichtung verlaufenden Schlitz aufweist, so daß das Frontteil entweder mit seiner Frontseite voraus oder mit seiner Rückseite voraus in das Rückteil einsetzbar ist und in eine Verriegelungslage drehbar ist, in der jeweils ein Steg in einen Schlitz eines Domes eingreift.

Diese Ausbildung ermöglicht es, das Frontteil in unterschiedlicher Einstecktiefe für die beiden beabsichtigten Einbauzustände in der Mündung des Rückteiles zu haltern, wobei gemäß vorliegendem Vorschlag das Frontteil wahlweise mit der einen oder der anderen Fläche der Scheibe voraus in das Rückteil eingesetzt wird, wodurch die unterschiedlichen Einbauzustände realisiert sind. Diese unterschiedliche Einbauweise ist dadurch ermöglicht, daß der Steg, der mit dem Schlitz des Domes jeweils zusammenwirkt, nicht in der Scheibenebene beziehungsweise in deren Randkante liegt, sondern gegenüber der Randkante der Scheibe, die das Frontteil bildet, axial versetzt ist. Für den Montierenden ist es damit in vereinfachter Weise möglich, lediglich durch Wenden des Frontteiles die eine oder andere Einbauweise zu realisieren.

Die kragenartige Wand des Frontteiles, an welchem der Steg angeformt ist, weist eine solche Erstreckung auf, daß es möglich ist, neben den Stegen jeweils die Dome einzuschieben, beziehungsweise das Frontteil auf die Dome in den Freiraum einzuschieben, und dann je nach Einbaurichtung des Frontteiles durch Linksdrehung oder Rechtsdrehung den Steg in den Schlitz der Dome einzuführen, so daß die gewünschte Lage arretiert ist.

Um für den Montierenden die Montage noch zu vereinfachen, ist vorgesehen, daß am Innenmantel des Rückteils Stützflächen vorgesehen sind, an denen sich das eingesetzte Frontteil entweder mit seiner einen Scheibenfläche oder mit von der anderen Scheibenfläche abragenden Kragensegmenten abstützt.

Hierdurch ist es für den Montierenden möglich, das Frontteil in der einen oder anderen Einbaulage in die Mündung des Rückteiles einzuführen, wobei durch die Stützflächen eine Einstecktiefenbegrenzung gebildet ist. Diese Einstecktiefenbegrenzung ist gleichzeitig die Ebene, in welcher das Frontteil relativ zum Rückteil zum Zwecke der Verriegelung gedreht wird.

Besonders bevorzugt ist vorgesehen, daß die Stützflächen als parallel zur Mittelachse des Rückteils gerichtete Stege ausgebildet sind, die vor der Mündung des Rückteiles enden und deren Enden die eigentlichen Stützflächen bilden.

Desweiteren ist besonders bevorzugt vorgesehen, daß das Rückteil mit dem Frontteil in der Verriegelungslage verrastet ist.

Hierdurch ist es möglich, nach der Drehung des Frontteiles in die Verriegelungslage eine Lagearretierung durch eine entsprechende Rastung sicherzustellen.

Eine besonders einfache Ausbildung der Rastung ist dadurch gekennzeichnet, daß als Rastmittel einerseits die Stützflächen des Rückteiles und andererseits am Rand des Frontteiles oder am Rand der Kragensegmente des Frontteiles ausgebildete Rastausnehmungen vorgesehen sind, in die die Stützflächen in der Verriegelungslage rastend eingreifen.

Die Stützflächen sind dabei vorzugsweise die Enden der achsparallel zur Mittelachse des Rückteiles gerichteten Stege.

Um das Einführen in die Rastposition zu erleichtern und zudem eine gewisse Vorspannung in der Rastposition zu bewirken, ist zudem vorgesehen, daß in Umfangsrichtung vor den Rastausnehmungen Einführschrägen ausgebildet sind.

Ausführungsbeispiele der Erfindung sind in den Zeichnungen dargestellt und im folgenden näher beschrieben.

Es zeigt:

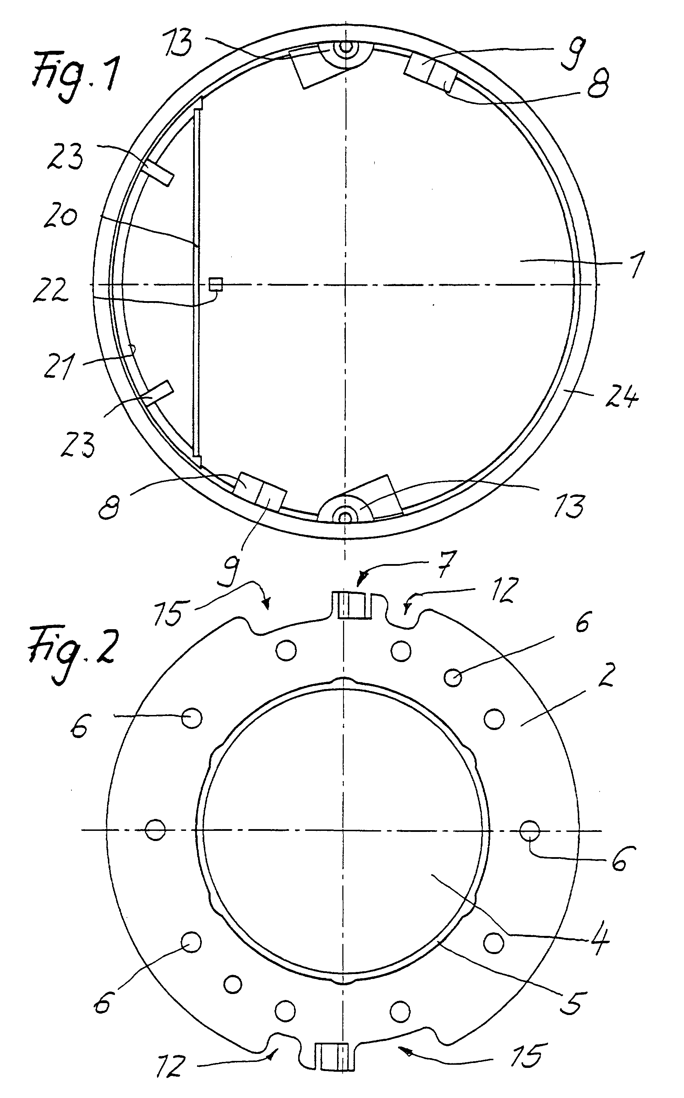

- Figur 1: eine Unteransicht des Rückteiles;

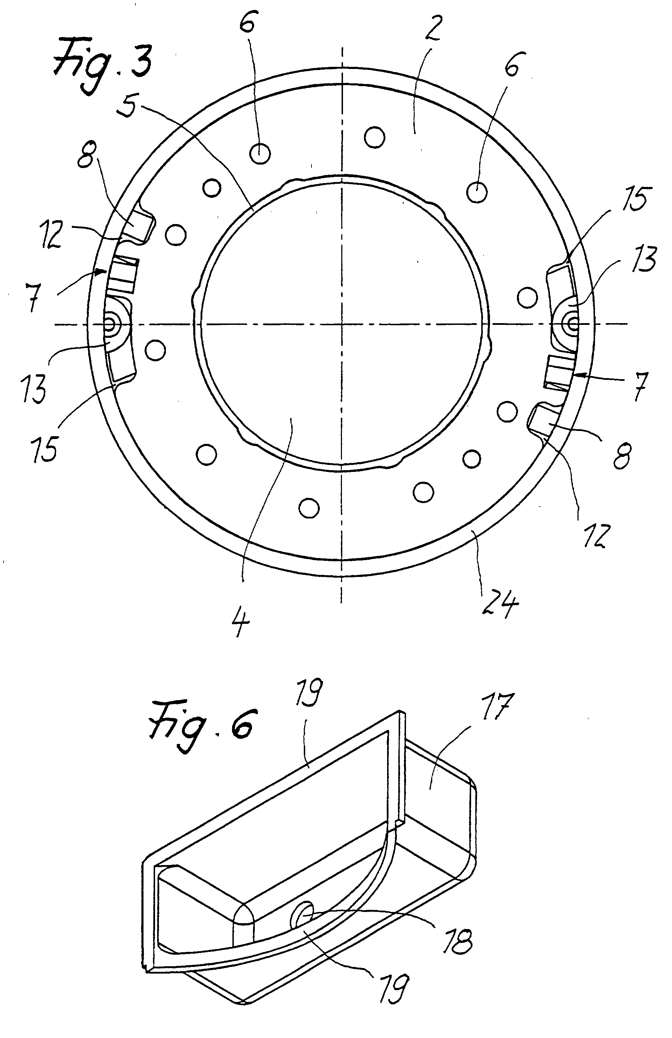

- Figur 2: eine Unteransicht des Frontteiles;
- Figur 3: das Rückteil mit eingesetztem Frontteil, ebenfalls in Unteransicht;

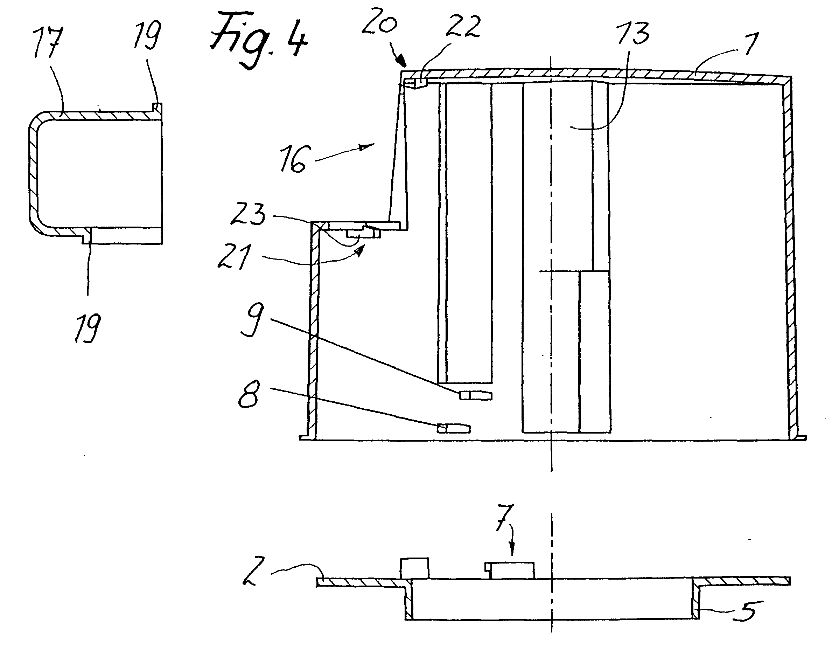

- Figur 4: eine Explosionsdarstellung von Frontteil und Rückteil im Mittelschnitt gesehen;
- Figur 5: desgleichen in isometrischer Ansicht;

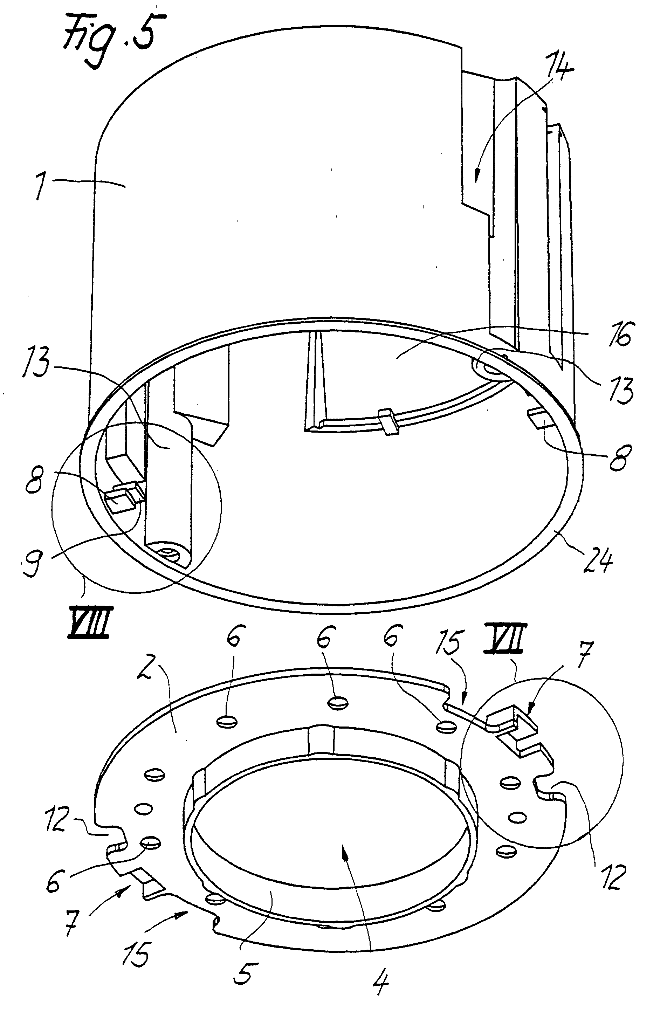

- Figur 6: eine Einzelheit in der Ansicht gemäß Figur 5;
- Figur 7: die Einzelheit VII der Figur 5 in vergrößertem Maßstab;

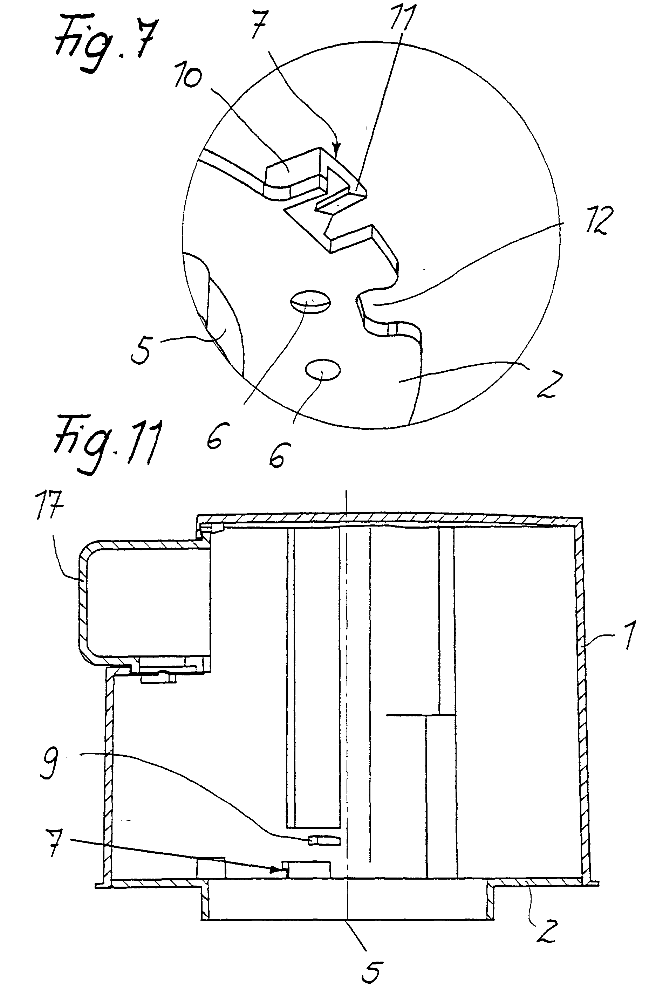

- Figur 8: die Einzelheit VIII der Figur 5 im vergrößerten Maßstab;
- Figur 9: den aus den Einzelteilen zusammengefügten Hohlkörper im Mittelschnitt gesehen;
- Figur 10: desgleichen in der Einbausituation;
- Figur 11: eine Ansicht analog Figur 9 in der alternativen Montageposition;
- Figur 12: desgleichen in der Einbausituation;
- Figur 13 bis 16: die Vorrichtung in einer ersten Einbausituation ("durch die Decke-Montage");
- Figur 17 bis 19: die Vorrichtung in einer zweiten Einbausituation hinter der Decke-Montage").

In der Zeichnung ist ein Hohlkörper für die Elektro-installation gezeigt. Der Hohlkörper ist beispielsweise für elektrische Niedervoltleuchten bestimmt und geeignet. Der Hohlkörper weist ein topfähnliches Rückteil 1 auf, welches mindestens nahe seiner Mündung zylindrisch ausgebildet ist, so daß es in eine kreisrunde Ausnehmung einer Decke eingesetzt werden kann und ein kreisrundes Element in die Mündung des Rückteiles eingesetzt werden kann. Ferner weist der Hohlkörper ein Frontteil 2 auf, daß in später noch beschriebener Weise an der Mündung des Rückteiles 1 befestigbar ist, und zwar in der Weise, daß der Hohlkörper hinter einer Hohlwand oder Decke 3 angeordnet werden kann und dessen Aufnahmeraum durch das eine entsprechende Öffnung 4 aufweisende, zentrisch zu einer Lochung der Hohlwand 3 angeordnete Frontteil 2 zugänglich ist.

Das Frontteil 2 ist als Scheibe mit Mittellochung 4 ausgebildet und so dimensioniert, daß es in die Mündung des Rückteiles 1 eingesetzt werden kann. In dieser in die Mündung eingesetzten Lage ist das Frontteil 2 am Rückteil 1 befestigbar.

Vorzugsweise weist das Frontteil 2 eine kreisartige Mittelöffnung 4 auf, die beispielsweise einen Durchmesser von 68 bis 80 mm aufweisen kann, was dem üblichen Durchmesser von Niedervolt-Halogenleuchten entspricht, die für eine versenkte Montage bestimmt sind. Die Mittelöffnung 4 ist von einem von dem Frontteil 2, das ebenso wie das Rückteil 1 aus Kunststoff besteht, abragenden Kragen 5 umgeben, wobei der Kragen 5 entgegen gerichtet dem Rückteil 1 von dem Frontteil 2 abragt. Das scheibenartige Frontteil 2 weist eine Vielzahl von kleinen Durchbrüchen 6 in seiner Scheibenfläche auf.

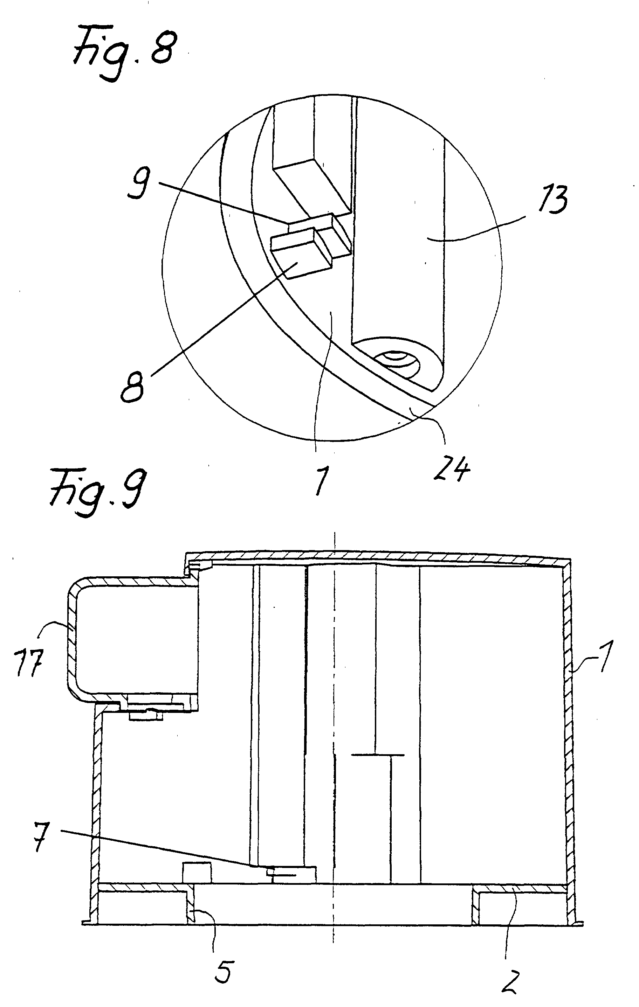

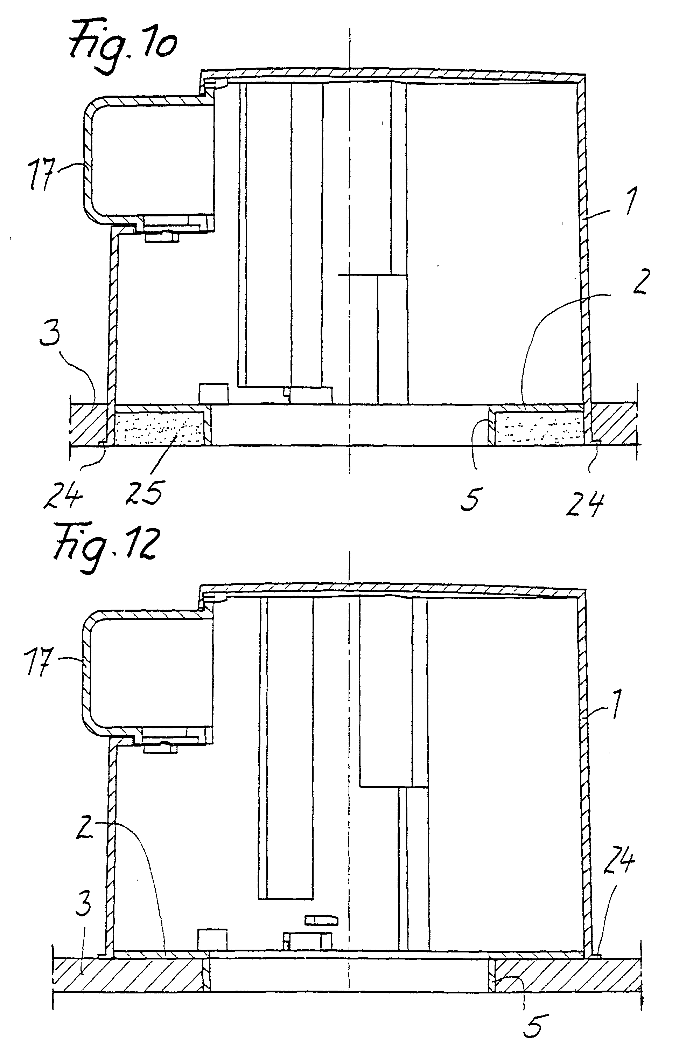

Wie insbesondere anhand der Figuren 9 bis 12 veranschaulicht, ist das Frontteil 2 alternativ in einer ersten Lage in der Mündung des Rückteils 1 befestigbar, in der das scheibenartige Frontteil 2 hinter dem Mündungsrand des Rückteiles zurückliegt, wobei der am Frontteil 2 vorgesehene, dessen Mittellochung 4 umgebende Kragen 5 mit seiner freien Randkante in Flucht zum Rand des Rückteiles 1 liegt (vergleiche Figur 9 und 10), oder einer zweiten Lage (vergleiche Figur 11 und 12) in der Mündung des Rückteiles 1 befestigbar ist, in der das scheibenartige Frontteil 2 etwa bündig mit dem Mündungsrand des Rückteiles 1 abschließt, wobei der am Frontteil 2 vorgesehene Kragen 5 um die Kragenhöhe über den Mündungsrand des Rückteiles 1 vorragt, was einen bündigen Abschluß mit der Sichtseite der Decke 3 analog der Einbausituation nach Figur 12 ermöglicht.

An der Rückseite des Frontteiles 2, die dem Inneren des Rückteiles 1 zugewandt ist, sind hakenartige Verbindungsmittel 7 nahe der Umfangsrandkante des Frontteiles 2 ausgebildet. An der Wandung des Rückteiles 1 sind nach innen vorragende Stützflächen 8, 9 vorgesehen, an die das Frontteil 2 mit seiner Rückseite anlegbar ist und hinter welche die hakenartigen Verbindungsmittel 7 greifen, wenn das Frontteil 2 relativ zum Rückteil 1 um die Mittelhochachse gedreht wird. Die Stützflächen 8,9 sind dabei als radial von der Innenwandung des Rückteiles 1 abragende Stege ausgebildet. Die hakenartigen Stege 7 des Frontteiles 2 sind durch in Umfangsrichtung des Frontteiles 2 einseitig offene und andernends durch einen Steg 10 geschlossene L-förmige, von der Rückseite des Frontteiles 2 abragende Stege gebildet, wie insbesondere anhand von Figur 7 verdeutlicht ist. Um eine sichere Verrastung in der Montagesollage zu erreichen, ist an dem in Einschubrichtung vorn liegenden Ende des einen Schenkels der L-Form der Stege 7 eine Rastkante 11 ausgebildet, die in der Montagesollage hinter eine dazu parallele Randkante der Stützflächen 8 oder 9 greift.

Vorzugsweise sind jeweils zwei Stützflächenpaare 8 beziehungsweise 9 diametral gegenüberliegend zueinander angeordnet, wobei die Stützflächenpaare 8 gegenüber den Stützflächenpaaren 9 in Umfangsrichtung zueinander versetzt in den beiden Befestigungsebenen des Rückteiles 1 angeordnet sind. Damit das Frontteil 2 mit den hakenartigen Stegen 7 auch auf die Stege 9 der zweiten Befestigungsebene aufgerastet werden kann, weist das Frontteil 2 randseitig offene Durchgriffe 12 auf, so daß in der entsprechenden Orientierung des Frontteiles 2 zum Rückteil 1 das Frontteil 2 an den Stegen 8 der ersten Ebene vorbeigeführt und an die zweiten Stege 9 angelegt werden kann, um dann durch Drehung mit den hakenartigen Stegen 7 an den Stegen 9 zu verrasten.

Desweiteren sind am Rückteil 1 an zwei diametral gegenüberliegenden Bereichen innenliegend Haltedome 13 vorgesehen, in die jeweils eine von der Vorderseite des Rückteiles 1 her betägigbare Schraube einsetzbar ist. Das Schraubenende liegt außerhalb des Rückteiles 1 im Bereich 14, wobei dort ebenfalls in an sich bekannter Weise eine Haltelasche aufgeschraubt ist, so daß mittels der Schraubenbetätigung die Haltelasche ausschwenkbar und an die Decke anziehbar ist, um das Rückteil 1 in der Einbausituation gemäß Figur 10 an der Decke 3 zu befestigen.

Die Dome 13 sind so ausgebildet, daß die Köpfe der Schrauben versenkt aufgenommen werden können und die Stirnflächen der Dome 13 gegebenenfalls noch in der Ebene der Stützflächen 8 liegen. Dabei hat das Frontteil 2 weitere randseitig offene Ausnehmungen 15, die in der anderen Montagelage die Enden der Dome 13 mit ausreichendem Bewegungsspiel die Umfangsrichtung umgeben, so daß das Frontteil 2 in der anderen Montageebene, in der die hakenartigen Stege 7 mit den Stegen 9 zusammenwirken, und zum Zwecke der Einführung und Verrastung ausreichend drehbeweglich ist.

Das Rückteil 1 weist zusätzlich im hinteren Bereich einen seitlichen Wandungsausschnitt 16 auf. Die Größe dieses Wandungsausschnittes 16 ist derart bemessen, daß ein durch die Mittellochung 4 des Frontteiles 2 zugeführtes Installationsteil, beispielsweise ein Transformator, sowohl durch die Mittellochung 4 in das Rückteil 1 als auch durch den Wandungsausschnitt 16 wieder aus dem Rückteil 1 heraus bewegbar ist, so daß das entsprechende Installationsteil in der Einbausituation hinter der Decke außerhalb des Rückteiles 1 anzuordnen ist. Auch bei einem Defekt dieses Installationsteiles ist es möglich, dieses wieder durch entsprechende Manipulation durch den Wandungsausschnitt 16 und die Öffnung 4 aus dem Hohlkörper zu entnehmen.

Desweiteren ist eine Verschlußkappe 17 für den Wandungsausschnitt 16 vorgesehen, die ebenfalls durch die Mittelöffnung 4 des Frontteiles 2 geschoben werden kann und in den Wandungsausschnitt 16 lagerichtig eingesetzt werden kann, so daß der Wandungsausschnitt luftdicht oder weitestgehend luftdicht verschlossen ist. Die Verschlußkappe 17 kann dabei eine Lochung 18 aufweisen, durch die ein elektrisches Anschlußkabel möglichst dicht einbeziehungsweise abgeführt werden kann. Zusätzlich kann in dem von der Verschlußkappe 17, die annähernd quaderförmig ausgebildet ist, gebildeten Innenraum eine elektrische Klemmleiste fixiert werden, die in der Montagesollage auch vom Innenraum des Rückteiles 1 her zugänglich ist. Die Verschlußkappe 17 weist an ihrem Rand einen umlaufenden Kragen 19 auf, der in Montagesollage dicht an die entsprechenden Ränder des Wandungsausschnittes 16 anschließt.

Der Wandungsausschnitt 16 ist quasi rechteckig ausgebildet. In der Wandung des Rückteiles 1 ist nahe des etwa parallel zum Boden des Rückteiles verlaufenden Randes 20 und nahe eines davon in Richtung zur Mündung beabstandeten Randes 21 der Durchlaßöffnung 16 die Anordnung von Rastmitteln 22, 23 vorgesehen, die in Montagesollage der Verschlußkappe 17 über Teile von deren Kragen 19 greifen. Der parallel zum Boden verlaufende Rand 20 der Durchlaßöffnung 16 ist dem Boden des Rückteiles 1 unmittelbar benachbart, wobei am Boden innenliegend des Rückteiles 1 Rastkufen mit Einführschräge als Rastmittel 22 ausgebildet sind, während am davon beabstandeten, etwa parallel verlaufenden Rand 21 hakenartige Rastmittel 23 vorgesehen sind. Zur Fixierung der Verschlußkappe 17 wird diese (sie befindet sich dann im Innenraum des Rückteiles 1) zunächst mit der Randkante 19 durch die Rastmittel 23 gehalten, wobei sie etwas schräg zugeführt wird, so daß sie dann um die Randkante 19, die sich in dem Rastmittel 23 befindet geschwenkt werden kann und die Randkante 19 in die Sollage in den Verrastungseingriff mit den Rastmitteln 22 gebracht wird. Das Entrasten ist in eben solcher Weise analog umgekehrt möglich, wobei der Benutzer beispielsweise mittels der Klinge eines Schraubendrehers hinter die Randkante 19 greifen kann und die Entrastung einleiten kann.

Der entsprechende Hohlkörper kann in unterschiedlichen Einbausituationen bei identischer Ausbildung der Einzelteile eingesetzt werden. Dazu ist gemäß Figur 10 das Rückteil 1 in eine Lochung einer Wandung oder Decke 3 von der Vorderseite her eingeschoben und mit den vorher beschriebenen Mitteln an dem Wandungs- oder Deckenmaterial fixiert. Insbesondere ist dazu auch am Rückteil 1 mündungsseitig ein kleiner umlaufender Kragen 24 vorgesehen, der in einem Versenk der Decke 3 angeordnet ist, und das Gegenlager beim Fixieren an der Decke 3 bildet. Das Frontteil 2 wird dann versenkt in der tieferen Montageposition, in die Mündung des Rückteils 1 eingesetzt und mittels der oben beschriebenen konstruktiven Mittel fixiert.

In der Einbausollsituation gemäß Figur 10 liegt der Kragen 5 des Frontteiles 2 bündig zum Mündungsrand des Rückteiles 1 und bündig mit der Sichtfläche der Wandung 3 oder Decke. Der zwischen dem Kragen 5 und dem Mündungsrand des Rückteiles 1 verbleibende Ringraum 25 kann von dem Monteur verspachtelt werden, so daß die Spachtelmasse das Frontteil 2 verdeckt. Anschließend kann beispielsweise die Sichtseite der Decke 3 mit der Wandbekleidung, beispielsweise Tapete, versehen werden. Lediglich die durch den Kragen 5 begrenzte Einbauöffnung für eine Leuchte oder dergleichen bleibt dann sichtbar.

Bei der Einbausituation nach Figur 12 ist das Frontteil 2 mit seinem Kragen 5 mindestens reibschlüssig in eine entsprechende Lochung der Wandung oder Decke 3 eingeschoben, wobei das scheibenartige Frontteil 2 auf der Rückseite der Wandung oder Decke 3 aufliegt. Das Rückteil 1 ist ebenfalls von der Rückseite der Decke 3 her auf das Frontteil 1 aufgesetzt, wobei der Kragen 24 des Rückteiles 1 an der Rückseite der Decke oder Wandung 3 anliegt. Auch in dieser Lage ist durch die entsprechenden Rast- und Verhakungsmittel das Rückteil 1 am Frontteil 2 fixiert, wobei das Rückteil 1 das Frontteil 2 übergreift.

Die Erfindung stellt einen Hohlkörper zur Verfügung, der bei identischer Ausbildung für die dargestellten unterschiedlichen Einbauarten geeignet und bestimmt ist, wobei ein weitgehend luftdichter Abschluß durch den Hohlkörper 1 zwischen dem hinter der Decke oder Wand befindlichem Raum und dem vor der Decke befindlichem Raum erreicht ist. Der Hohlkörper ist zum Einbau unterschiedlicher elektrischer Installationselemente geeignet und bestimmt, wobei insbesondere auch der Einbau von Halogen-Niedervoltleuchten üblicher Bauart ermöglicht ist und die Anordnung des zugehörigen Transformators oder dergleichen hinter der Decke 3 außerhalb des Rückteiles 1 ermöglicht ist.

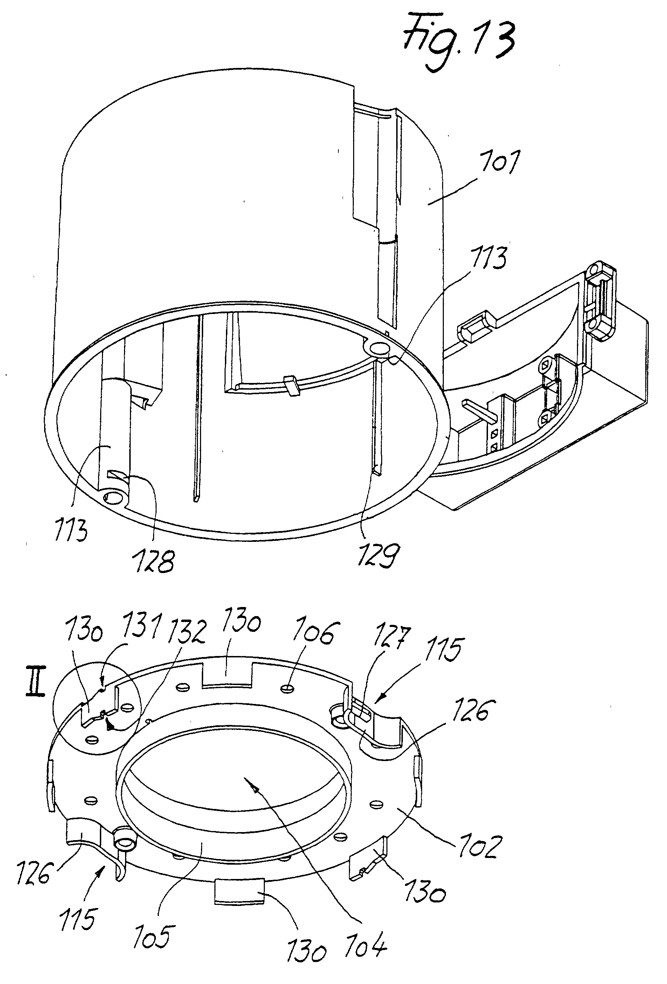

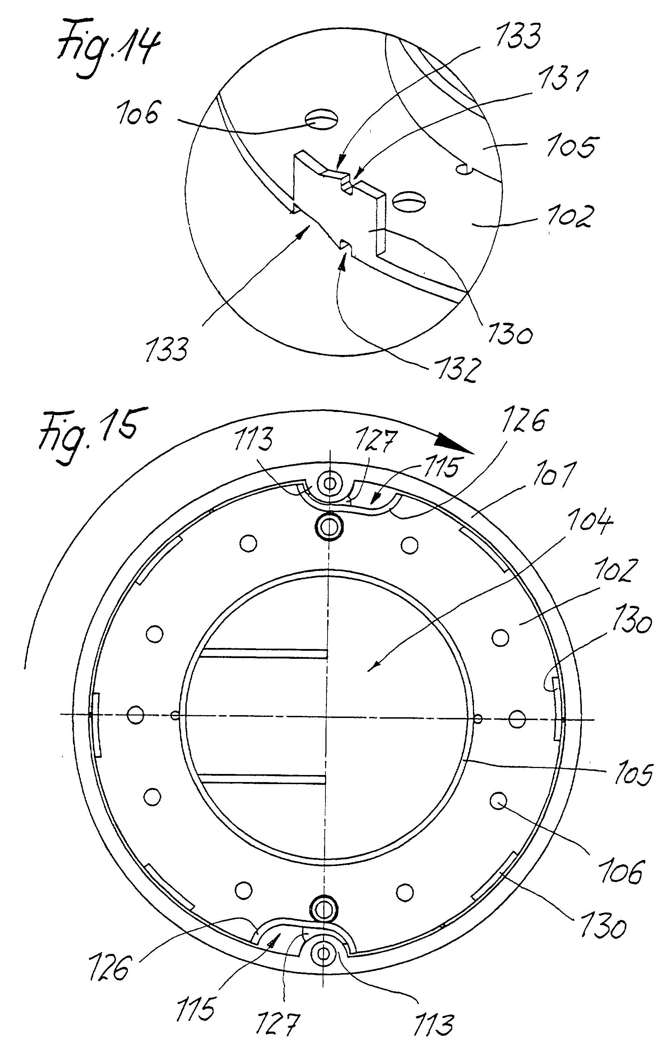

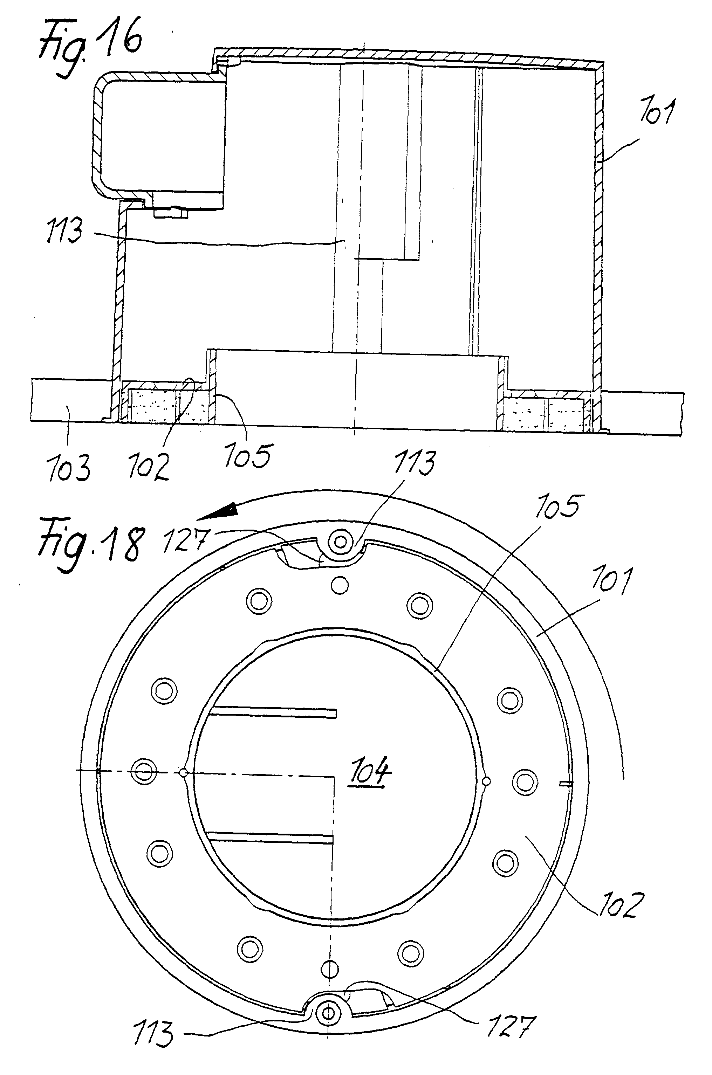

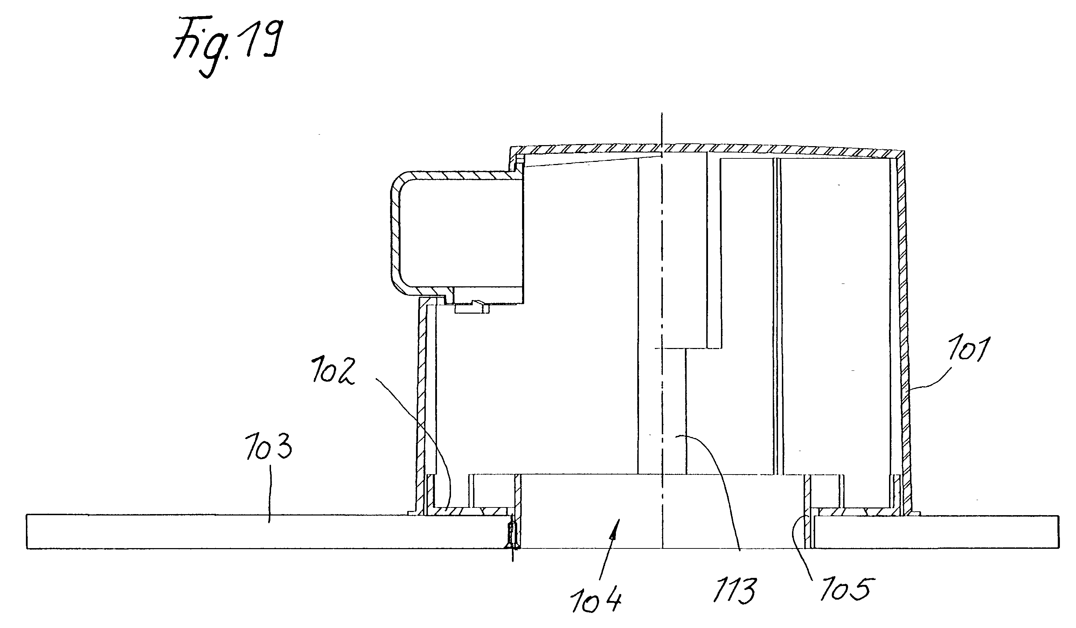

In den Zeichnungen Figur 13 bis Figur 19 ist ein Hohlkörper für die Elektroinstallation gezeigt. Der Hohlkörper ist beispielsweise für elektrische Niedervoltleuchten bestimmt und geeignet. Er weist ein topfähnliches Rückteil 101 auf, welches mindestens nahe seiner Mündung zylindrisch ausgebildet ist, so daß es in eine kreisrunde Ausnehmung einer Decke eingesetzt werden kann und ein kreisrundes Element in die Mündung des Rückteiles 101 eingesetzt werden kann. Ferner weist der Hohlkörper ein Frontteil 102 auf, daß an der Mündung des Rückteiles 101 befestigbar ist, und zwar in der Weise, daß der Hohlkörper hinter einer Hohlwand oder Decke 103 angeordnet werden kann und dessen Aufnahmeraum durch das eine entsprechende Öffnung 104 aufweisende, zentrisch zu einer Lochung der Hohlwand 103 angeordnete Frontteil 102 zugänglich ist. Das Frontteil 102 ist als Scheibe mit Mittelöffnung 104 ausgebildet und so dimensioniert, daß es in die Mündung des Rückteiles 101 eingesetzt werden kann. In der in die Mündung eingesetzten Lage ist das Frontteil 102 am Rückteil 101 arretierbar.

Die Mittelöffnung 104 ist von einem, von dem Frontteil 102, das ebenso wie das Rückteil 101 aus Kunststoff besteht, abragenden Kragen 105 umgeben, wobei der Kragen 105 beidseitig über die Fläche des Frontteiles 102 vorragt. Die Scheibe des scheibenartigen Frontteiles 102 weist eine Vielzahl von kleinen Durchbrüchen 106 in seiner Scheibenfläche auf.

Wie anhand der Gegenüberstellung der Zeichnungsfiguren 13 bis 16 und 17 bis 19 veranschaulicht, ist das Frontteil 102 alternativ in einer ersten Lage in der Mündung des Rückteiles 101 befestigbar, in der das scheibenartige Frontteil 102 hinter dem Mündungsrand des Rückteiles 101 zurückliegt, wobei der am Frontteil 102 vorgesehene Kragen 105 mit seiner freien Randkante in Flucht zum Rand des Rückteiles 101 liegt, oder in einer zweiten Lage in der Mündung des Rückteiles 101 befestigbar ist, in der das scheibenartige Frontteil 102 etwa bündig mit dem Mündungsrand des Rückteiles 101 abschließt, wobei der vorgesehene Kragen 105 um die Kragenhöhe über den Mündungsrand des Rückteiles 101 vorragt, was einen bündigen Abschluß mit der Sichtseite der Decke 103 analog der Einbausituation nach Figur 19 ermöglicht.

Am Rückteil sind an zwei diametral gegenüberliegenden Bereichen innenliegend Haltedome 113 angeformt. Das Frontteil 102 hat randseitig offene Ausnehmungen 115, die derart groß bemessen sind, daß die Enden der Dome 113 hindurchpassen und neben den Domen noch ein gleich großer Freiraum verbleibt.

Die randoffenen Ausnehmungen 115 des Frontteiles 102 sind jeweils von einem kragenartigen Wandteil 126 des Frontteiles 102 begrenzt. An dem Wandteil 126 ist jeweils ein sich in Umfangsrichtung erstreckender Steg 127 quasi radial außen ausgebildet. Der Steg 127 verläuft nur über einen Teil der Länge des Randteiles 126 und der entsprechenden Ausnehmung 115, so daß neben dem Steg 127 in dem von dem Kragen 126 umgebenden randoffenen Bereich ein Freiraum zur Aufnahme des Endes eines Domes 113 verbleibt.

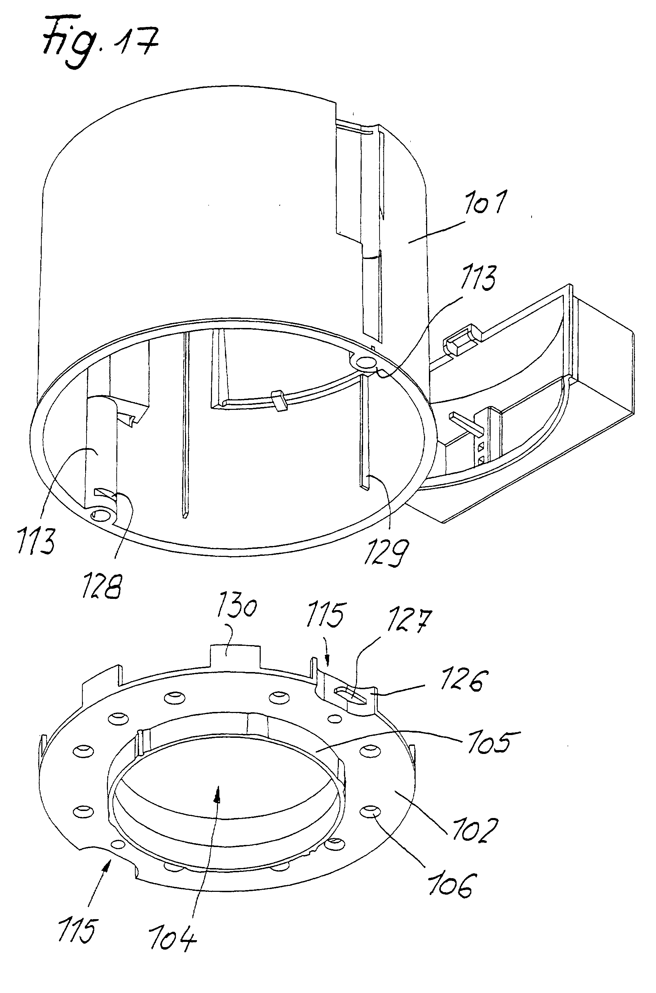

Der Steg 127 verläuft parallel zur Randkante und mit Abstand von der Randkante des Frontteiles 102, also gegenüber dieser in axialer Richtung des Frontteiles versetzt. Jeder Dom 113 hat einen in Umfangsrichtung verlaufenden Schlitz 128, so daß das Frontteil 102 entweder mit seiner Frontseite voraus (vgl. Figur 13) oder mit seiner Rückseite voraus (vgl. Figur 17) in das Rückteil 101 einsetzbar ist und in eine Verriegelungslage entweder im Uhrzeigersinn oder entgegen dem Uhrzeigersinn drehbar ist, in der jeweils ein Steg 127 in einen Schlitz 128 eines Domes 113 eingreift. Zusätzlich sind am Innenmantel des Rückteiles 101 Stützflächen 129 vorgesehen, an denen sich das eingesetzte Frontteil 102 entweder mit seiner einen Scheibenfläche oder mit von der anderen Scheibenfläche abragenden Kragensegmenten 130 abstützt. Die Stützflächen 129 sind als parallel zur Mittelachse des Rückteiles 101 gerichtete Stege ausgebildet, die vor der Mündung des Rückteiles 101 enden und deren Enden die eigentlichen Stützflächen 129 bilden.

Bevorzugt ist das Rückteil 101 mit dem Frontteil 102 in der Verriegelungslage verrastbar. Als Rastmittel sind einerseits die Stützflächen 129 des Rückteiles 101 und andererseits am Rand des Frontteiles 102 oder am Rand der Kragensegmente 130 des Frontteiles 102 ausgebildete Rastausnehmungen 131, 132 vorgesehen. In diese greifen die Stützflächen 129 in der Verriegelungslage rastend ein. In Umfangsrichtung vor den Rastausnehmungen 131, 132 sind jeweils Einführschrägen 133 ausgeformt, was für den Rastvorgang vorteilhaft und für eine gewisse Verspannung in der Rastsituation hilfreich ist.

Die erfindungsgemäße Ausbildung ermöglicht es, die beiden alternativen Einbausituationen allein durch Umkehr des Frontteiles 102 einzustellen.

## Patentansprüche

1. Hohlkörper für die Elektroinstallation mit einem Aufnahmeraum für elektrische Einrichtungen wie Leuchten, Klemmen, Dosen oder dergleichen Installationsteile, wobei der Hohlkörper ein topfähnliches Rückteil (1), das mindestens mündungsnah zylindrisch ausgebildet ist, sowie ein Frontteil (2), aufweist, das an der Mündung des Rückteiles (1) befestigbar ist, so dass der Hohlkörper hinter einer Hohlwand oder Hohldecke (3) anzuordnen und der Aufnahmeraum durch das eine entsprechende Öffnung (4) aufweisende, zentrisch zu einer Lochung der Hohlwand angeordnete Frontteil (2) zugänglich ist, wobei das Frontteil (2) scheibenartig ausgebildet und in die Mündung des Rückteils (1) eingreifend ausgebildet ist, wobei das Frontteil (2) in der Montagesolllage in der Mündung des Rückteils (1) fixierbar ist, **dadurch gekennzeichnet, dass** das Frontteil (2) alternativ in einer ersten Lage in der Mündung des Rückteils (1) befestigbar ist, in der das scheibenartige Frontteil (2) hinter dem Mündungsrand des Rückteiles (1) zurückliegt, wobei ein am Frontteil (2) vorgesehener, dessen Mittellochung umgebender Kragen (5) mit seiner freien Randkante in Flucht zum Rand des Rückteiles (1) liegt, oder in einer zweiten Lage in der Mündung des Rückteiles (1) befestigbar ist, in der das scheibenartige Frontteil (2) etwa bündig mit dem Mündungsrand des Rückteiles (1) abschließt, wobei ein am Frontteil (2) vorgesehener, dessen Mittellochung (4) umgebender Kragen (5) etwa um die Kragenhöhe über den Mündungsrand des Rückteiles (1) vorragt.

2. Hohlkörper nach Anspruch 1, **dadurch gekennzeichnet, dass** das Frontteil (2) eine vornehmlich kreisartige Mittelöffnung (4) aufweist, die von einem von dem Frontteil abragenden Kragen (5) umgeben ist, wobei der Kragen (5) auf der dem Rückteil (1) abgewandten Seite von dem Frontteil (2) abragt.

3. Hohlkörper nach Anspruch 1 oder 2,
**dadurch gekennzeichnet, dass** das scheibenartige Frontteil (2) in seiner Scheibenfläche kleine Durchbrüche (6) aufweist.

4. Hohlkörper nach einem der Ansprüche 1 bis 3,
**dadurch gekennzeichnet, dass** an der Rückseite des Frontteiles (2) die dem Inneren des Rückteiles (1) zugewandt ist, hakenartige Verbindungsmittel (7) nahe der Umfangsrandkante des Frontteiles (2) vorgesehen sind, und dass an der Wandung des Rückteiles (1) Stützflächen (8,9) vorgesehen sind, an die das Frontteil (2) anlegbar ist und hinter welche die hakenartigen Verbindungsmittel (7) bei Drehung des Frontteiles (2) relativ zum Rückteil (1) greifen.

5. Hohlkörper nach Anspruch 4,
**dadurch gekennzeichnet, dass** die Stützflächen (8,9) als radial von der Innenwandung des Rückteils abragende Stege ausgebildet sind.

6. Hohlkörper nach Anspruch 4 oder 5,
**dadurch gekennzeichnet, dass** die hakenartigen Stege (7) des Frontteiles (2) durch in Umfangsrichtung des Frontteils (2) einseitig offene und andernends geschlossene L-förmige von der Rückseite des Frontteils (2) abragende Stege (10) gebildet sind.

7. Hohlkörper nach einem der Ansprüche 4 bis 6,
**dadurch gekennzeichnet, dass** jeweils zwei Stützflächenpaare (8,9) diametral gegenüberliegend und paarweise in Umfangsrichtung zueinander versetzt in den beiden Befestigungsebenen des Rückteiles (1) vorgesehen sind.

8. Hohlkörper nach einem der Ansprüche 1 bis 7,
**dadurch gekennzeichnet, dass** am Rückteil (1) an zwei diametral gegenüberliegenden Bereichen innenliegend Haltedome (13) vorgesehen sind, in denen jeweils eine von der Vorderseite des Rückteils (1) her betätigbare Schrauben gelagert sind, auf deren in Ausnehmungen (14) der Außenumfangsfläche des Rückteiles (1) austretende Enden Haltelaschen aufgeschraubt sind.

9. Hohlkörper nach Anspruch 8, **dadurch gekennzeichnet, dass** die Dome (13) die Köpfe der Schrauben versenkt aufnehmen und die Stirnflächen der Dome (13) in der Ebene der Stützflächen (8) für die zweite Lage liegen, wobei das Frontteil (2) randseitig offene Ausnehmungen (15) aufweist, die die Enden der Dome (13) bei in der ersten Lage angeordnetem Frontteil (8) mit Spiel in Umfangsrichtung des Frontteiles (2) umgeben.

10. Hohlkörper nach einem der Ansprüche 1 bis 9,
**dadurch gekennzeichnet, dass** das Rückteil (1) einen seitlichen Wandungsausschnitt (16) aufweist, der eine Größe aufweist, die der Größe von durch die Mittellochung (4) des Frontteiles (2) schiebbaren Installationsteilen entspricht, wobei eine durch die Mittellochung (4) zuführbare Verschlusskappe (17) vorgesehen ist, die den Wandungsausschnitt (16) insbesondere dicht schließend in den Wandungsausschnitt (16) einfügbar ist.

11. Hohlkörper nach Anspruch 10,
**dadurch gekennzeichnet, dass** in der Verschlusskappe (17) eine elektrische Klemmleiste gehaltert ist, die vom Innenraum des Rückteils (1) zugänglich ist, wobei eine Bodenwandung der Verschlusskappe (17) eine Durchlassöffnung (18) für ein von außen zugeführtes Kabel aufweist, wobei das Kabel vorzugsweise abgedichtet eingeführt ist.

12. Hohlkörper nach Anspruch 10 oder 11,
**dadurch gekennzeichnet, dass** die Verschlusskappe (17) an ihrem Rand einen umlaufenden Kragen (19) aufweist, der dicht an die Ränder des Wandungssausschnittes (16) des Rückteiles (1) anschließt.

13. Hohlkörper nach Anspruch 12,
**dadurch gekennzeichnet, dass** an der Wandung des Rückteils (1) nahe eines etwa parallel zum Boden des Rückteils (1) verlaufenden Randes (20) und nahe eines davon in Richtung zur Mündung beabstandeten Randes (21) des Wandungsausschnitts (16) Rastmittel (22,23) vorgesehen sind, die in Montagesolllage der Verschlusskappe (17) über Teile von deren Kragen (19) greifen.

14. Hohlkörper nach Anspruch 13,
**dadurch gekennzeichnet, dass** der parallel zum Boden verlaufende Rand (20) der Durchlassöffnung dem Boden des Rückteils (1) unmittelbar benachbart ist und am Boden innenliegend des Rückteils (1) Rastkufen mit Einführschräge als Rastmittel (22) ausgebildet sind, während am davon beabstandeten, etwa parallel verlaufenden anderen Rand (21) des Wandungsausschnitts (16) hakenartige Rastmittel (23) vorgesehen sind.

15. Hohlkörper nach einem der Ansprüche 1 bis 14, **dadurch gekennzeichnet, dass** das Rückteil (1) in eine Lochung einer Wandung oder einer Decke (3) eingeschoben und in der Einschublage an dem Wandungs- oder Deckenmaterial fixiert ist, das Frontteil (2) versenkt in der ersten Lage in die Mündung des Rückteils (1) eingesetzt und dort fixiert ist, so dass der Kragen (5) des Frontteiles (2) bündig zum Mündungsrand des Rückteiles (1) und bündig mit der Außenseite der Wandung oder Decke (3) abschließt.

16. Hohlkörper nach einem der Ansprüche 1 bis 14, **dadurch gekennzeichnet, dass** das Frontteil (2) mit seinem Kragen (5) mindestens reibschlüssig in eine passende Lochung einer Wandung oder Decke (3) eingeschoben ist, wobei das scheibenartige Frontteil (2) auf der Rückseite der Wandung oder Decke (3) anliegt, und dass das Rückteil (1) in der zweiten Lage auf das Frontteil (2) von der Rückseite der Decke oder Wandung (3) aufgesetzt und an diesem fixiert ist.

17. Hohlkörper nach einem der Ansprüche 1 bis 16, **dadurch gekennzeichnet, dass** das Rückteil (1) mündungsseitig einen kleinen, außen umlaufenden Kragen (24) aufweist, der in der ersten Lage bündig in einem Randversenk der Lochung der Wandung oder Decke (3) einliegt.

18. Hohlkörper nach einem der Ansprüche 1 bis 17, **dadurch gekennzeichnet, dass** die randoffenen Ausnehmungen (115) des Frontteiles (102) von einem kragenartigen Wandteil (126) des Frontteiles (102) begrenzt sind, dass an dem Wandteil (126) ein sich in Umfangsrichtung erstreckender Steg (127) ausgebildet ist, wobei der Steg (127) nur über einen Teil der Länge des Wandteiles (126) verläuft und neben dem Steg (127) ein Freiraum zur Aufnahme des Endes des Domes (113) des Rückteiles (101) verbleibt, dass der Steg (127) parallel zur Randkante und mit Abstand von der Randkante des Frontteiles (102) verläuft, und dass jeder Dom (113) einen in Umfangsrichtung verlaufenden Schlitz (128) aufweist, so dass das Frontteil (102) entweder mit seiner Frontseite voraus oder mit seiner Rückseite voraus in das Rückteil (101) einsetzbar ist und in eine Verriegelungslage drehbar ist, in der jeweils ein Steg (127) in einen Schlitz (128) eines Domes (113) eingreift.

19. Hohlkörper nach Anspruch 18, **dadurch gekennzeichnet, dass** am Innenmantel des Rückteils (101) Stützflächen (129) vorgesehen sind, an denen sich das eingesetzte Frontteil (102) entweder mit seiner einen Scheibenfläche oder mit von der anderen Scheibenfläche abragenden Kragensegmenten (130) abstützt.

20. Hohlkörper nach Anspruch 19,
**dadurch gekennzeichnet, dass** die Stützflächen (129) als parallel zur Mittelachse des Rückteils (101) gerichtete Stege ausgebildet sind, die vor der Mündung des Rückteiles (101) enden und deren Enden die eigentlichen Stützflächen (129) bilden.

21. Hohlkörper nach Anspruch 19 oder 20, **dadurch gekennzeichnet, dass** das Rückteil (101) mit dem Frontteil (102) in der Verriegelungslage verrastet ist.

22. Hohlkörper nach Anspruch 21, **dadurch gekennzeichnet, dass** als Rastmittel einerseits die Stützflächen (129) des Rückteiles (101) und andererseits am Rand des Frontteiles (102) oder am Rand der Kragensegmente (130) des Frontteiles (102) ausgebildete Rastausnehmungen (131,132) vorgesehen sind, in die die Stützflächen (129) in der Verriegelungslage rastend eingreifen.

23. Hohlkörper nach Anspruch 22,
**dadurch gekennzeichnet, dass** in Umfangsrichtung vor den Rastausnehmungen (131,132) Einführschrägen (133) ausgebildet sind.

## Claims

1. A hollow body for electrical installation with a housing chamber for electrical equipment such as lights, terminals, socket outlets or similar installation parts, wherein the hollow body comprises a rear part (1) similar to a pot, which has a cylindrical construction at least close to the mouth, and also a front part (2), which can be fixed to the mouth of the rear part (1), so that the hollow body is to be disposed behind a hollow wall or hollow ceiling (3) and the housing chamber is accessible through the front part (2) that comprises a corresponding aperture (4) and is disposed centrally with respect to a perforation in the hollow wall, wherein the front part (2) has a disk-like construction and is designed to engage in the mouth of the rear part (1), wherein the front part (2) can be fixed in the mouth of the rear part (1) in the set assembly position,
**characterised in that** the front part (2) can alternatively be fixed in a first position in the mouth of the rear part (1), in which the disk-shaped front part (2) is situated behind the mouth edge of the rear part (1), wherein a collar (5) provided on the front part (2) and surrounding its central perforation is in alignment by its free edge with the edge of the rear part (1), or can be fixed in a second position in the mouth of the rear part (1), in which the disk-shaped front part (2) ends roughly flush with the mouth edge of the rear part (1), wherein a collar (5) provided on the front part (2) and surrounding its central perforation (4) protrudes roughly by the height of the collar over the mouth edge of the rear part (1).

2. A hollow body according to Claim 1,
**characterised in that** the front part (2) comprises a predominantly circular central aperture (4), which is surrounded by a collar (5) protruding from the front part, wherein the collar (5) protrudes from the front part (2) on the side further from the rear part (1).

3. A hollow body according to Claim 1 or 2,
**characterised in that** the disk-shaped front part (2) comprises small openings (6) in its disk face.

4. A hollow body according to one of Claims 1 to 3,
**characterised in that** on the rear side of the front part (2) closer to the interior of the rear part (1), hook-type connection means (7) are provided close to the circumferential edge of the front part (2),
and **in that** support surfaces (8, 9) are provided on the wall of the rear part (1), against which the front part (2) can be placed and behind which the hook-type connection means (7) engage upon the rotation of the front part (2) relative to the rear part (1).

5. A hollow body according to Claim 4,
**characterised in that** the support surfaces (8, 9) are constructed as webs that project radially from the inner wall of the rear part.

6. A hollow body according to Claim 4 or 5,
**characterised in that** the hook-type webs (7) of the front part (2) are formed by webs (10) that are open on one side in the circumferential direction of the front part (2) and at the other end have a closed L shape and protrude from the rear side of the front part (2).

7. A hollow body according to one of Claims 4 to 6,
**characterised in that** in each case two pairs of support faces (8, 9) are provided diametrically opposite one another and staggered in pairs in the circumferential direction in the two fastening planes of the rear part (1).

8. A hollow body according to one of Claims 1 to 7,
**characterised in that** retaining domes (13) are provided on the interior on the rear part (1) at two diametrically opposite regions, in which in each case screws that can be operated from the front side of the rear part (1) are mounted, and retaining brackets are screwed onto their ends emerging in recesses (14) of the outer circumferential surface of the rear part (1).

9. A hollow body according to Claim 8,
**characterised in that** the domes (13) house the heads of the screws in countersunk manner and the end faces of the domes (13) lie in the plane of the support faces (8) for the second position, wherein the front part (2) comprises recesses (15) open at the edges, which surround the ends of the domes (13) with clearance in the circumferential direction of the front part (2) when the front part (8) is disposed in the first position.

10. A hollow body according to one of Claims 1 to 9,
**characterised in that** the rear part (1) comprises a lateral wall cut-out (16), which has a size corresponding to the size of installation parts that can be pushed through the central perforation (4) of the front part (2), wherein a cowl (17) that can be fed through the central perforation (4) is provided, which can be inserted into the wall cut-out (16) and seals the wall cut-out (16) particularly tightly.

11. A hollow body according to Claim 10,
**characterised in that** an electrical strip terminal, which is accessible from the interior of the rear part (1), is mounted in the cowl (17), wherein a bottom wall of the cowl (17) comprises an opening (18) for a cable supplied from outside, the cable preferably being introduced in sealed manner.

12. A hollow body according to Claim 10 or 11,
**characterised in that** the cowl (17) comprises a circumferential collar (19) at its edge, which is tightly connected to the edges of the wall cut-out (16) of the rear part (1).

13. A hollow body according to Claim 12,
**characterised in that** at the wall of the rear part (1) close to an edge (20) running roughly parallel to the bottom of the rear part (1) and close to an edge (21) of the wall cut-out (16) spaced therefrom towards the mouth are provided snap-in means (22, 23), which in the set assembly position of the cowl (17) engage over parts of its collar (19).

14. A hollow body according to Claim 13,
**characterised in that** the edge (20) of the opening running parallel to the bottom is directly adjacent to the bottom of the rear part (1) and at the bottom inside the rear part (1) snap-in runners with an introduction incline are constructed as snap-in means (22), whereas hook-shaped snap-in means (23) are provided at the other edge (21) of the wall cut-out that is spaced therefrom and runs roughly parallel.

15. A hollow body according to one of Claims 1 to 14,
**characterised in that** the rear part (1) is inserted into a perforation in a wall or a ceiling (3) and is fixed in the inserted position to the wall or ceiling material, the front part (2) is inserted countersunk into the mouth of the rear part (1) in the first position and is fixed there, so that the collar (5) of the front part (2) ends flush with the opening edge of the rear part (1) and flush with the outer side of the wall or ceiling (3).

16. A hollow body according to one of Claims 1 to 14,
**characterised in that** the front part (2) is inserted by its collar (5) at least frictionally tight into a matching perforation in a wall or ceiling (3), wherein the disk-type front part (2) lies on the rear side of the wall or ceiling,
and **in that** in the second position the rear part (1) is placed onto the front part (2) from the rear side of the ceiling or wall (3) and is fixed to it.

17. A hollow body according to one of Claims 1 to 16,
**characterised in that** on the mouth side the rear part (1) comprises a small, outer circumferential collar (24), which in the first position lies flush in an edge sunk hole of the perforation of the wall or the ceiling (3).

18. A hollow body according to one of Claims 1 to 17,
**characterised in that** the recesses (115), open at the edge, of the front part (102) are limited by a collar-type wall part (126) of the front part (102),
**in that** a web (127) extending in the circumferential direction is constructed at the wall part (126), wherein the web (127) runs only over one part of the length of the wall part (126) and next to the web (127) a space remains to house the end of the dome (113) of the rear part (101),
**in that** the web (127) runs parallel to the edge and spaced from the edge of the front part (102),
**and in that** each dome (113) comprises a slot (128) running in the circumferential direction, so that the front part (102) can be inserted either with its front side first or with its rear side first into the rear part (101) and can be rotated into a locking position, in which in each case one web (127) engages in a slot (128) in a dome (113).

19. A hollow body according to Claim 18,
**characterised in that** on the inner surface of the rear part (101) are provided support surfaces (128), on which the inserted front part (102) is supported either by its one disk face or by collar segments (130) that protrude from the other disk face.

20. A hollow body according to Claim 19,
**characterised in that** the support surfaces (129) are constructed as webs directed parallel to the centre axis of the rear part(101), which end in front of the mouth of the rear part (101) and the ends of which form the actual support surfaces (129).

21. A hollow body according to Claim 19 or 20,
**characterised in that** the rear part (101) is latched to the front part (102) in the locking position.

22. A hollow body according to Claim 21,
**characterised in that** firstly the support surfaces (129) of the rear part (101) and secondly snap-in recesses (131) that are constructed on the edge of the front part (102) or at the edge of the collar segments (130) of the front part (102) are provided as snap-in means, into which recesses which the support surfaces (129) engage in the locking position.

23. A hollow body according to Claim 22,
**characterised in that** introduction inclinations (133) are constructed in the circumferential direction in front of the snap-in recesses (131, 132).

## Revendications

1. Corps creux pour une installation électrique avec un volume de réception pour des équipements électriques tels que lampes, bornes, prises ou analogues, le corps creux présentant une partie arrière (1) en forme de pot, qui est de forme cylindrique au moins à proximité de l'embouchure, ainsi qu'une partie avant (2) qui peut être fixée à l'embouchure de la partie arrière (1) de telle façon que le corps creux puisse être placé derrière un mur creux ou un plafond creux (3) et que le volume de réception soit accessible à travers la partie avant (2) centrée par rapport à un perçage du mur creux, présentant une ouverture (4) correspondante, la partie avant (2) étant en forme de disque et conçue de façon à s'encliqueter dans l'embouchure de la partie arrière (1), la partie avant (2) pouvant être fixée dans la position de montage prévue dans l'embouchure de la partie arrière (1), **caractérisé par le fait que** la partie avant (2) peut au choix être fixée dans l'embouchure de la partie arrière (1) dans une première position dans laquelle la partie avant (2) en forme de disque se trouve en arrière du bord de l'embouchure de la partie arrière (1), tandis qu'une collerette (5) prévue sur la partie avant (2), entourant son perçage central, est en alignement par son arête extérieure libre avec le bord de la partie arrière (1), ou fixée dans l'embouchure de la partie arrière (1) dans une deuxième position dans laquelle la partie avant (2) en forme de disque ferme à peu près en affleurement avec le bord de l'embouchure de la partie arrière (1), tandis qu'une collerette (5) prévue sur la partie avant (2), entourant son perçage central (4), déborde d'à peu près la hauteur de la collerette du bord de l'embouchure de la partie arrière (1).

2. Corps creux selon la revendication 1, **caractérisé par le fait que** la partie avant (2) présente une ouverture centrale (4) principalement circulaire qui est entourée par une collerette (5) dépassant de la partie avant, la collerette (5) dépassant du côté de la partie avant (2) opposé à la partie arrière (1).

3. Corps creux selon la revendication 1 ou 2, **caractérisé par le fait que** la partie avant (2) en forme de disque présente de petites ouvertures (6) dans sa surface de disque.

4. Corps creux selon l'une des revendications 1 à 3, **caractérisé par le fait qu'**il est prévu, sur la face arrière de la partie avant (2) qui est tournée vers l'intérieur de la partie arrière (1), des moyens de fixation (7) en forme de crochets à proximité de l'arête extérieure périphérique de la partie avant (2) et qu'il est prévu sur la paroi de la partie arrière (1) des surfaces d'appui (8, 9), sur lesquelles la partie avant (2) peut être appliquée et derrière lesquelles les moyens de fixation (7) en forme de crochets mordent lors de la rotation de la partie avant (2) par rapport à la partie arrière (1).

5. Corps creux selon la revendication 4, **caractérisé par le fait que** les surfaces d'appui (8, 9) sont formées d'ergots dépassant radialement de la paroi intérieure de la partie arrière.

6. Corps creux selon la revendication 4 ou 5, **caractérisé par le fait que** les ergots (7) en forme de crochets de la partie avant (2) sont formés d'ergots en forme de L, ouverts d'un côté et fermés à l'autre extrémité en direction périphérique de la partie avant (2), dépassant de la face arrière de la partie avant (2).

7. Corps creux selon l'une des revendications 4 à 6, **caractérisé par le fait qu'**il est prévu chaque fois deux paires de surfaces d'appui (8, 9) diamétralement opposées et décalées l'une par rapport à l'autre en direction périphérique par paires dans les deux plans de fixation de la partie arrière (1).

8. Corps creux selon l'une des revendications 1 à 7, **caractérisé par le fait qu'**il est prévu sur la partie arrière (1), sur deux zones diamétralement opposées, des dômes de retenue (13) intérieurs, dans lesquels sont logées des vis manoeuvrables depuis la face avant de la partie arrière (1), sur les extrémités desquelles, sortant dans des évidements (14) de la surface périphérique extérieure de la partie arrière (1), sont vissées des languettes de retenue.

9. Corps creux selon la revendication 8, **caractérisé par le fait que** les dômes (13) reçoivent les têtes de vis en montage noyé et que les surfaces frontales des dômes (13) se situent dans le plan des surfaces d'appui (8) pour la deuxième position, la partie avant (2) présentant au bord des évidements (15) ouverts qui entourent avec du jeu en direction périphérique de la partie avant (8) les extrémités des dômes (13) lorsque la partie avant (8) se trouve dans la première position.

10. Corps creux selon l'une des revendications 1 à 9, **caractérisé par le fait que** la partie arrière (1) présente une découpe de paroi latérale (16) qui présente une grandeur correspondant à la grandeur des pièces d'installation insérable à travers le perçage central (4) de la partie avant (2), un couvercle de fermeture (17) qui peut être introduit à travers le perçage central (4) étant prévu, ledit couvercle pouvant être inséré dans la découpe de paroi (16) et en particulier fermant hermétiquement la découpe de paroi (16).

11. Corps creux selon la revendication 10, **caractérisé par le fait qu'**une barrette à bornes électrique, accessible de l'intérieur de la partie arrière (1), est fixée dans le couvercle de fermeture (17), une paroi de fond du couvercle de fermeture (17) présentant une ouverture de passage (18) pour un câble amené de l'extérieur, le câble étant introduit de préférence de façon étanche.

12. Corps creux selon la revendication 10 ou 11, **caractérisé par le fait que** le couvercle de fermeture (17) présente sur son bord une collerette périphérique (19) qui se raccorde de façon étanche aux bords de la découpe de paroi (16) de la partie arrière (1).

13. Corps creux selon la revendication 12, **caractérisé par le fait qu'**il est prévu sur la paroi de la partie arrière (1), à proximité d'un bord (20) à peu près parallèle au fond de la partie arrière (1) et à proximité d'un bord (21) de la découpe de paroi (16) situé à distance du premier en direction de l'embouchure, des moyens d'encliquetage (22, 23), qui dans la position de montage prévue du couvercle de fermeture (17), mordent sur des parties de sa collerette (19).

14. Corps creux selon la revendication 13, **caractérisé par le fait que** le bord (20), parallèle au fond de l'ouverture de passage, est directement adjacent au fond de la partie arrière (1) et que des patins d'encliquetage avec biseau d'introduction sont formés, en tant que moyens d'encliquetage (22), sur le fond à l'intérieur de la partie arrière (1), tandis que sur l'autre bord (21) de la découpe de paroi (16), situé à distance du premier, à peu près parallèle, il est prévu des moyens d'encliquetage (23) en forme de crochets.

15. Corps creux selon l'une des revendications 1 à 14, **caractérisé par le fait que** la partie arrière (1) est insérée dans une paroi ou un plafond (3) et fixée en position insérée sur le matériau de la paroi ou du plafond, la partie avant (2) est encastrée dans la première position dans l'embouchure de la partie arrière (1) et est fixée là, de telle façon que la collerette (5) de la partie avant (2) ferme en affleurement avec le bord de l'embouchure de la partie arrière (1) et en affleurement avec la face externe de la paroi ou du plafond (3).

16. Corps creux selon l'une des revendications 1 à 14, **caractérisé par le fait que** la partie avant (2) est insérée avec sa collerette (5), au moins par frottement, dans un perçage approprié d'une paroi ou d'un plafond (3), la partie avant (2) en forme de disque portant sur la face arrière de la paroi ou du plafond (3) et que la partie arrière (1), dans la deuxième position, est placée sur la partie avant (2) par la face arrière de la paroi ou du plafond (3) et fixée à celle-ci.

17. Corps creux selon l'une des revendications 1 à 16, **caractérisé par le fait que** la partie arrière (1) présente, côté embouchure, une petite collerette (24) périphérique extérieurement qui, dans la première position, est logée en affleurement dans un évidement latéral du perçage de la paroi ou du plafond (3).

18. Corps creux selon l'une des revendications 1 à 17, **caractérisé par le fait que** les évidements (115) ouverts sur le bord de la partie avant (102) sont limités par une partie de paroi (126) en forme de collerette de la partie avant (102), qu'un ergot (127) s'étendant en direction périphérique est formé sur la partie de paroi (126), l'ergot (127) ne s'étendant que sur une partie de la longueur de la partie de paroi (126) et un espace libre prévu pour recevoir l'extrémité du dôme (113) de la partie arrière (101) subsistant à côté de l'ergot (127), que l'ergot (127) s'étend parallèlement à l'arête extérieure et à distance de l'arête extérieure de la partie avant (102) et que chaque dôme (113) présente une fente (128) s'étendant en direction périphérique, de telle façon que la partie avant (102) peut être mise en place dans la partie arrière (101), soit avec sa face avant en avant, soit avec sa face arrière en avant, et tournée dans une position de verrouillage, dans laquelle un ergot (127) s'encliquette chaque fois dans une fente (128) d'un dôme (113).

19. Corps creux selon la revendication 18, **caractérisé par le fait qu'**il est prévu, sur l'enveloppe intérieure de la partie arrière (101), des surfaces d'appui (129), sur lesquelles la partie avant (102) mise en place s'appuie, soit par sa surface de disque, soit par des segments de collerette (130) dépassant de l'autre surface de disque.

20. Corps creux selon la revendication 19, **caractérisé par le fait que** les surfaces d'appui (129) sont formées de nervures parallèles à l'axe médian de la partie arrière (101), qui se terminent avant l'embouchure de la partie arrière (101) et dont les extrémités forment les surfaces d'appui (129) proprement dites.

21. Corps creux selon la revendication 19 ou 20, **caractérisé par le fait que** la partie arrière (101) peut être encliquetée avec la partie avant (102) dans la position de verrouillage.

22. Corps creux selon la revendication 21, **caractérisé par le fait qu'**il est prévu comme moyens d'encliquetage, d'une part, les surfaces d'appui (129) de la partie arrière (101) et, d'autre part, des évidements d'encliquetage (131, 132) formés sur le bord de la partie avant (102) ou sur le bord des segments de collerette (130) de la partie avant (102), dans lesquels les surfaces d'appui (129) s'encliquettent dans la position de verrouillage.

23. Corps creux selon la revendication 22, **caractérisé par le fait que** des biseaux d'introduction (133) sont formés avant les évidements d'encliquetage (131, 132) en direction périphérique.
